# EUROPÄISCHE PATENTSCHRIFT

(11) **EP 0 788 175 B1**
(45) Veröffentlichungstag und Bekanntmachung des Hinweises auf die Patenterteilung: **12.04.2000**
(21) Anmeldenummer: 96810071.9
(22) Anmeldetag: 02.02.1996
(51) Int. Cl.: H01M 8/12, H01M 8/24

(54) **Hochtemperatur-Brennstoffzelle mit einem Dünnfilm-Elektrolyten**
High temperature fuel cell with an electrolyte thin film
Pile à combustible fonctionnant à haute température avec électrolyte à couche mince

(43) Veröffentlichungstag der Anmeldung: 06.08.1997
(73) Patentinhaber: Sulzer Hexis AG, 8400 Winterthur (CH)
(72) Erfinder: Batawi, Emad, Dr., CH-8409 Winterhur (CH); Honegger, Kaspar, Dr., CH-8360 Wallenwil (CH)
(74) Vertreter: Heubeck, Bernhard

(56) Entgegenhaltungen:
- WO-A-95/07554
- DE-A- 4 205 210
- PROCEEDINGS OF THE INTERSOCIETY ENERGY CONVERSION ENGINEERING CONFERENCE. (IECEC), WASHINGTON, AUG. 6 - 11, 1989, Bd. 3, 6.August 1989, JACKSON W D;HULL D A, Seiten 1547-1551, XP000078904 DOKIYA M ET AL: "FABRICATION OF A PLANAR SOLID OXIDE FUEL CELL"
- JOURNAL OF THE CERAMIC SOCIETY OF JAPAN, INTERNATIONAL EDITION, Bd. 100, Nr. 6, 1.Juni 1992, Seiten 838-841, XP000323205 TATSUYA KAWADA ET AL: "FABRICATION OF A PLANAR SOLID OXIDE FUEL CELL BY TAPE-CASTING AND CO-FIRING METHOD"
- PATENT ABSTRACTS OF JAPAN vol. 017, no. 375 (E-1397), 14.Juli 1993 & JP-A-05 062691 (MURATA MFG CO LTD), 12.März 1993,
- PATENT ABSTRACTS OF JAPAN vol. 013, no. 099 (E-724), 8.März 1989 & JP-A-63 274062 (FUJIKURA LTD), 11.November 1988,

## Beschreibung

Die Erfindung betrifft eine Hochtemperatur-Brennstoffzelle mit einem Dünnfilm-Elektrolyten gemäss Oberbegriff von Anspruch 1. Eine derartige Brennstoffzelle ist aus der EP 0 635 896 A bekannt. Die Erfindung bezieht sich auch auf eine Batterie mit stapelartig angeordneten Brennstoffzellen.

Bei der bekannten Brennstoffzelle ist das elektrochemisch aktive Element, das aus einer Anode, einem Feststoffelektrolyten und einer Kathode in einer planaren Anordnung besteht, mittels eines Vakuum-Plasma-Spritzverfahrens, kurz VPS-Verfahren, hergestellt.

Dünnfilm-Elektrolyte, wie sie mittels des VPS-Verfahrens herstellbar sind, erlauben Betriebstemperaturen von 600 bis 800°C. Bei elektrochemisch aktiven Elementen in Form von selbstragenden Platten, wie sie bei älteren Brennstoffzelltypen üblich sind, liegen die Betriebstemperaturen bei 900 bis 1000°C. Bei den niederen Temperaturen fallen verschiedene Probleme im Zusammenhang mit der Materialwahl weg, die bei den höheren Temperaturen Ursache für hohe Kosten sind. Für Brennstoffzellen mit Dünnfilm-Elektrolyten sind daher gegenüber den älteren Brennstoffzelltypen namhafte Kostenreduktionen zu erwarten. Es verbessert sich auch die Langzeitstabilität der Brennstoffzellen.

Bei der bekannten Brennstoffzelle ist die Trägerstruktur für das elektrochemisch aktive Element ein flexibler, schichtartig ausgebildeter poröser Körper. In einer Randzone dieser Trägerstruktur sind die Poren, die relativ gross sind, mit feinen metallischen Partikeln gefüllt. Diese Randzone stellt eine feinporige Schicht dar, auf die sich die Dünnfilmschichten des elektrochemisch aktiven Elements aufbringen lassen. Die Flexibilität der Trägerstruktur hat die vorteilhafte Wirkung, dass schädliche Thermospannungen zwischen dem keramischen Elektrolyten und der metallischen Trägerstruktur vermieden werden können. Allerdings ist die vorgeschlagene Verwendung eines Metallfilzes als Trägerstruktur bezüglich der Herstellung des elektrochemisch aktiven Elements mittels Dünnfilmtechnik problematisch, da es schwierig ist, mit dem offenbarten Verfahren ein für das Auftragen von Dünnfilmschichten geeignetes Substrat herzustellen. Ein Substrat ist geeignet, wenn es trotz seiner Porosität eine glatte, homogene und defektfreie Oberfläche aufweist.

Es ist daher die Aufgabe der Erfindung, eine Brennstoffzelle zu schaffen, deren Trägerstruktur für das elektrochemisch aktive Element sich besser als Substrat für eine Dünnfilmbeschichtung eignet. Diese Aufgabe wird durch die in Anspruch 1 definierte Brennstoffzelle gelöst.

Die Hochtemperatur-Brennstoffzelle mit einem Dünnfilm-Elektrolyten weist ein elektrochemisch aktives Element auf, das als planare Mehrschichtenstruktur ausgebildet ist. Zumindest die Elektrolyt- und die Kathodenschicht sind mittels Dünnfilmtechnik auf einer porösen, gasdurchlässigen Trägerstruktur aufgebracht. Die Trägerstruktur ist ein Sinterkörper aus metallkeramischem Material ("Cermet"), der eine hochporöse Grundschicht sowie eine auf der Grundschicht aufgesetzte feinporige Deckelschicht aus Anodenmaterial umfasst. Die Poren der Grundschicht sind gegeneinander offen und weisen einen mittleren Durchmesser von mindestens 300 µm auf. Die Poren der Deckelschicht weisen Durchmesser auf, die nicht wesentlich grösser als 1 µm sind. Der thermische Ausdehnungskoeffizient der Trägerstruktur ist im wesentlichen gleich jenem des Feststoffelektolyten.

Die abhängigen Ansprüche 2 bis 10 betreffen vorteilhafte Ausführungsformen. Gegenstand des Anspruchs 11 ist eine Batterie von erfindungsgemässen Hochtemperatur-Brennstoffzellen.

Nachfolgend wird die Erfindung anhand der Zeichnungen erläutert. Es zeigen:
- Fig. 1: ein elektrochemisch aktives Element auf einer erfindungsgemässen Trägerstruktur mit einer Grundschicht in Form einer offenporigen Schaumstruktur,
- Fig. 2: schematisch einen Vielschichtenaufbau eines elektrochemisch aktiven Elements und
- Fig. 3: ausschnittsweise einen Querschnitt durch Brennstoffzellen eines Zellenstapels, wobei die Querschnittsebene parallel zur Stapelachse liegt.

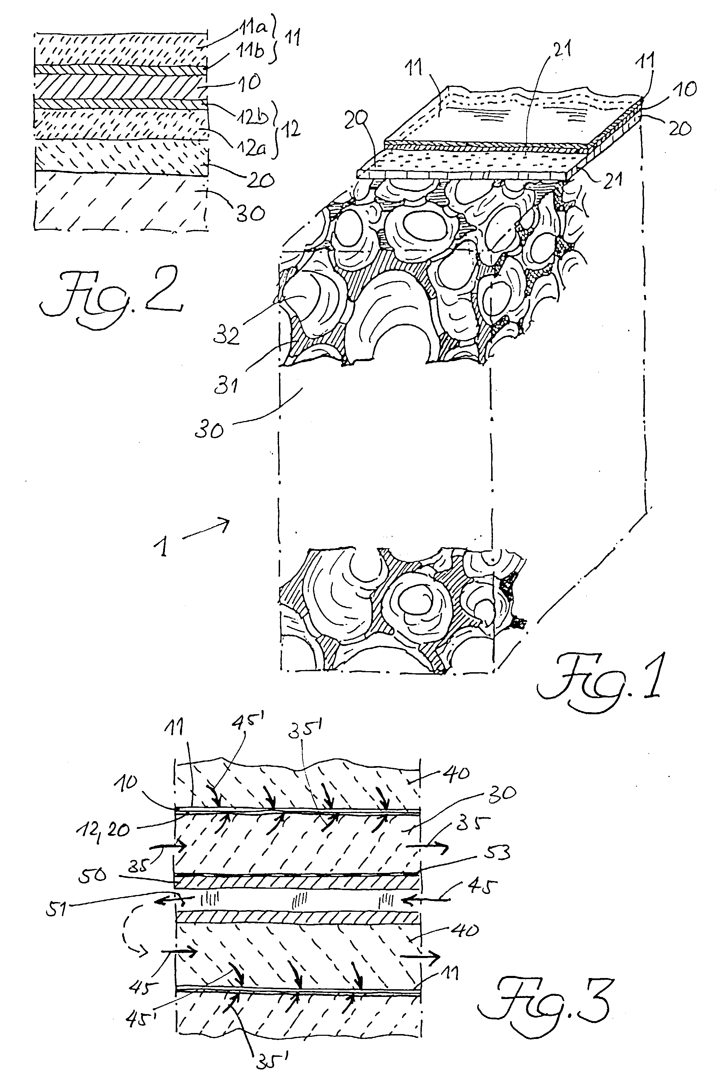

Die planare Mehrschichtenstruktur 1 der Fig.1 setzt sich aus folgenden Schichten oder Lagen zusammen: Elektrolyt 10, der mittels Dünnfilmtechnik hergestellt ist; Kathode 11 auf der Luftseite des Elektrolyten 10; Deckelschicht 20, die einerseits zusammen mit der Grundschicht 30 eine Trägerstruktur für die Schichten 10 und 11 bildet und die andererseits hier gleichzeitig die Funktion der Anode hat. Die Deckelschicht 20 ist porös (Poren 21 in Fig.1).

Die Grundschicht 30 besteht aus einem metallkeramischem Material 31 und weist grosse Poren 32 auf. Die dargestellte Schaumstruktur gewinnt man beispielsweise wie folgt: Man beschichtet das Gerippe eines offenporigen Kunststoffschaums mit einem Schlicker, der Pulverpartikel aus Metalloxiden und keramischem Material enthält. Nach dem Trocknen erhält man durch Sintern in einer reduzierenden Atmosphäre, in der die Metalloxide ihren Sauerstoff abgeben, eine geeignete tragfeste Struktur. Beim Sintern verflüchtigt sich das Material des Kunststoffgerippes.

Die Deckelschicht 20 wird mit Vorteil mittels eines Bandgiessverfahrens ("tape casting") hergestellt. Bei diesem Verfahren wird ein plastisch verformbares Gemisch von pulverförmigen Feststoffen und Bindemittel zu dünnen Folien - Dicke rund 0,3 mm - ausgewalzt. Vorzugsweise verwendet man für die Feststoffe die gleichen oder ähnliche Stoffe wie für die Grundschicht, die sich beim Sintern in reduzierender Atmosphäre in eine für die Anodenreaktionen geeignete Form umwandeln. Die frisch erzeugte Folie legt man auf die ungetrocknete Grundschicht. Beim Trocknen verbinden sich die beiden Schichten. Beim Sintern dieses zweischichtigen Körpers ergibt sich eine Volumenreduktion. Die Dicke der Deckelschicht 20 verringert sich auf rund 150 µm. Gleichzeitig bilden sich durch die Reduktion der Metalloxide Poren 21 aus, die nicht wesentlich grösser als 1 µm sind. Je nach Herstellverfahren hat die Dicke der Deckelschicht 20 einen Wert zwischen 80 und 300 µm.

Eine vorteilhafte Mischung der pulverförmigen Feststoffe für die Herstellung der Grundschicht und der Deckelschicht besteht aus 70% NiO und 30% YSZ (= mit Y₂O₃ stabilisiertes ZrO₂ = Elektrolytmaterial). Als Binder werden dieser Mischung PVB (Polyvinylbutyral) und/oder PEG (Polyethylenglycol) zugegeben. Ein Phosphatester wird als Dispersionsmittel verwendet. Ein geeignetes Lösungsmittel ist Ethylenglykol. Das Sintern wird bei rund 1400°C durchgeführt. Danach wird das Nickeloxid NiO in einer Wasserstoffatmosphäre zu metallischem Nickel reduziert; dabei bleibt das stabilisierte Zirkoniumoxid YSZ chemisch unverändert.

Dank des filigranen Aufbaus der Trägerstruktur entstehen beim Sintern keine Spannungen, die zu Rissen führen; Rissbildungen sind sonst oft bei der Herstellung monolithischer Körper aus metallkeramischem Material zu beobachten.

Die Fig.1 zeigt den einfachsten Aufbau eines auf einer Trägerstruktur aufgebrachten elektrochemisch aktiven Elements. Die Dünnfilmtechnik ermöglicht es, komplexer aufgebaute Mehrschichtenstrukturen relativ einfach herzustellen, die dank dieser Komplexität Vorteile gegenüber dem einfachsten Aufbau aufweisen. In Fig.2 ist eine derartige Struktur mit vielschichtigem Aufbau angedeutet: Auf der Deckelschicht 20, die hier nicht mehr die Funktion einer Anode hat, ist eine aus zwei Filmen 12a und 12b bestehende Anode 12 aufgebracht.

In dem Film 12a, der beispielsweise das oben erwähnte Gemisch von Ni und YSZ enthält und der 5 bis 30 µm dick ist, finden während des Betriebs der Brennstoffzelle die Anodenreaktionen statt. Statt Ni können auch andere Metalle oder Gemische von Metallen vorgesehen werden. Statt des YSZ, das ein Ionenleiter ist, können auch keramische Materialien verwendet werden, die neben Ionen auch Elektronen leiten (z.B. Ceroxid, das mit Gadolinium dotiert ist).

Der zweite Film 12b ist eine ausgleichend wirkenden Übergangsschicht mit einer Dicke von 1 bis 15 µm. Aufgrund besonders gewählter Zusammensetzung und Aufbau überbrückt die Übergangsschicht 12b Unterschiede zwischen den Materialien der folgenden Schicht 10, nämlich der Elektrolytschicht, und der äusseren Anodenschicht 12a. Der Film 12b besteht beispielsweise aus einem Gemisch von Stoffen, die Ionen und Elektronen leiten.

Auf die Elektrolytschicht 10, die 5 bis 20 µm dick ist, kommt die Kathode 11 zu liegen, die wie die Anode 12 aus zwei Filmen 11a und 11b aufgebaut ist. Der Film 11b ist ebenfalls eine Übergangsschicht, die Ionen und Elektronen leitet oder die beispielsweise mittels Palladium katalytisch wirksam ist. Der Film 11a ist die elektrochemisch aktive Kathode, die aus einem Perowskit besteht.

Zur Herstellung der verschiedenen Dünnfilme kommen verschiedene Techniken in Frage: Thermische Spritzverfahren wie VPS, das auch LPPS ("low pressure plasma spraying") genannt wird, oder Hochgeschwindigkeitsflammspritzen (HVOF = "High Velocity Oxy Fuel"); auch PVD ("Physical Vapour Deposition") wie Megnetron-Sputtern oder EBPVD ("Electron Beam PVD"); ferner Siebdrucktechniken oder Sol-Gel-Verfahren.

Die Grundschicht 30 lässt sich gut auf eine metallische Platte auflöten, wobei beispielsweise eine NiCrP-Lötfolie verwendet werden kann. Für die Herstellung einer Brennstoffzelle wird die Grundschicht 30 auf einen plattenförmigen Körper 50 (siehe Fig.3) aufgelötet, der als Wärmetauscher für eine Aufheizung der für die Reaktion benötigten Luft vorgesehen ist.

Fig.3 zeigt ausschnittsweise einen Querschnitt durch zwei benachbarte Brennstoffzellen eines Zellenstapels. Am oberen Ende dieses Ausschnittes ist ein Teil einer luftführenden Lage 40 zu sehen. Die Pfeile 45' deuten den Transport des Sauerstoffs aus der Luft 45 zu der Kathode 11 an. Das auf der anderen Seite des Elektrolyten 10 in der Grundschicht 30 fliessende Gas 35 speist - Pfeile 35' - die Anode 12 mit Wasserstoff und Kohlenmonoxid, die über energieliefernde Anodenreaktionen zu Wasser und Kohlendioxid umgesetzt werden.

Die Grundschicht 30 ist über eine Lötverbindung 53 mit der Wärmetauscherplatte 50 verbunden. Diese Platte 50 mit Luftkanälen 51 ist die erste Lage der benachbarten Brennstoffzelle. Nachdem die Luft 45 beim Durchströmen der Kanäle 51 praktisch auf Reaktionstemperatur aufgeheizt worden ist, wird sie über eine nicht dargestellte Verbindung in die luftführende Lage 40 der unteren Zelle eingeleitet. Diese Lage 40 kann ähnlich wie die Schicht 30 durch einen keramischen Schaumkörper gebildet sein, wobei dieser Schaumkörper aber keine oxidierbaren Metalle enthalten darf. Die Lage 40 kann auch mittels gleichmässig angeordneter Noppen hergestellt sein, die entweder mit der unteren Seite der Wärmetauscherplatte 50 oder mit der Oberfläche der Kathode 11 fest verbunden sind.

Es besteht die Möglichkeit, anstelle der gasführenden Lage 30 die luftführende Lage 40 als Träger für das elektrochemisch aktive Element 11, 10, 12 vorzusehen. Eine derartige Lösung ist in der europäischen Anmeldung EP 0 722 193 A beschrieben. Es handelt sich dabei um einen hochporösen Sinterkörper, der aus kathodenähnlichem Material hergestellt ist. Gegenüber dieser Lösung hat die hier offenbarte Trägerstruktur folgende Vorteile:
- Eine verbesserte mechanische Stabilität, die - insbesondere bei den hohen Temperaturen - irreversiblen Verformungen einen grösseren Widerstand entgegensetzt.
- Eine verbesserte Leitfähigkeit, insbesondere bei den vorgesehenen Betriebstemperaturen von 600 - 800°C.
- Dank der metallischen Anteile eine verbesserte Ausführbarkeit von Lötverbindungen.
- Eine leichtere Herstellbarkeit des aus einem Keramikschaum und einer Deckelschicht aufgebauten Elements mit anodenähnlichem statt mit kathodenähnlichem Material.
- Eine einfache Erzeugung der für den Gasdurchtritt notwendigen Porosität in der Deckelschicht durch das Sintern in einer reduktiven Atmosphäre.
- Eine weniger problematische Herstellbarkeit von elektrochemisch aktiven Elementen mit grossen Durchmessern.

In der genannten Anmeldung EP 0 722 193 A sind weitere Ausführungsformen von hochporösen Trägerstrukturen beschrieben (siehe dort die Figuren 9 und 10).

Entsprechende Trägerstrukturen lassen sich auch für die gasseitige Grundschicht 30 vorsehen.

In der gleichen Anmeldung sind konkrete Brennstoffzellen beschrieben, die einen zentralsymmetrischen Aufbau haben (Figuren 1 und 2). Entsprechend aufgebaute Zellen lassen sich mit der hier offenbarten Mehrschichtenstruktur herstellen. Derartige Zellen bilden in Serie geschaltet einen zylindrischen Stapel.

## Patentansprüche

1. Hochtemperatur-Brennstoffzelle mit einem Dünnfilm-Elektrolyten (10), deren elektrochemisch aktives Element - bestehend aus Kathode (11), Elektrolyt und Anode (12) - als planare Mehrschichtenstruktur (1) ausgebildet ist, wobei zumindest die Elektrolyt- und die Kathodenschicht mittels Dünnfilmtechnik auf einer porösen, gasdurchlässigen Trägerstruktur (20, 30) aufgebracht sind,
dadurch gekennzeichnet, dass die Trägerstruktur ein Sinterkörper aus metallkeramischem Material (31) ist, der eine hochporöse Grundschicht (30) sowie eine auf der Grundschicht aufgesetzte feinporige, vorzugsweise aus Anodenmaterial bestehende Deckelschicht (20) umfasst, wobei die Poren (32) der Grundschicht gegeneinander offen sind und einen mittleren Durchmesser von mindestens 300 µm aufweisen, während die Poren (21) der Deckelschicht Durchmesser aufweisen, die nicht wesentlich grösser als 1 µm sind und wobei der thermische Ausdehnungskoeffizient der Trägerstruktur im wesentlichen gleich jenem des Feststoffelektolyten ist.

2. Hochtemperatur-Brennstoffzelle nach Anspruch 1, dadurch gekennzeichnet, dass die Deckelschicht (20) mittels eines Bandgiessverfahrens hergestellt ist und eine Dicke von 80 bis 300 µm, vorzugsweise von rund 150 µm, hat.

3. Hochtemperatur-Brennstoffzelle nach Anspruch 1 oder 2, dadurch gekennzeichnet, dass die Grundschicht (30) eine offenporige Schaumstruktur aufweist.

4. Hochtemperatur-Brennstoffzelle nach einem der Ansprüche 1 bis 3, dadurch gekennzeichnet, dass das metallkeramische Material (31) der Trägerstruktur aus Nickel und stabilisiertem Zirkoniumoxid besteht.

5. Hochtemperatur-Brennstoffzelle nach einem der Ansprüche 1 bis 4, dadurch gekennzeichnet, dass die Dicke der Elektrolytschicht (10) zwischen 5 und 20 µm beträgt.

6. Hochtemperatur-Brennstoffzelle nach einem der Ansprüche 1 bis 5, dadurch gekennzeichnet, dass die Elektrolytschicht (10) direkt auf die Deckelschicht (20) der Trägerstruktur aufgebracht ist.

7. Hochtemperatur-Brennstoffzelle nach einem der Ansprüche 1 bis 5, dadurch gekennzeichnet, dass zwischen der Deckelschicht (20) der Trägerstruktur und der Elektrolytschicht (10) mindestens eine als Anode wirkende Schicht (12) angeordnet ist.

8. Hochtemperatur-Brennstoffzelle nach Anspruch 7, dadurch gekennzeichnet, dass die Anode aus zwei Filmen (12a, 12b) besteht, einer 1 bis 15 µm dicken, ausgleichend wirkenden Übergangsschicht (12b) und einer 5 bis 30 µm dicken Schicht (12a), an der die Anodenreaktionen stattfinden können, wobei diese Schichten aus Gemischen von einem oder mehreren Metallen und keramischem Material - insbesondere Elektrolytmaterial - zusammengesetzt sind.

9. Hochtemperatur-Brennstoffzelle nach einem der Ansprüche 1 bis 8, dadurch gekennzeichnet, dass die Kathode (11) aus zwei Schichten (11a, 11b) besteht, einer 1 bis 15 µm dicken, ausgleichend wirkenden Übergangsschicht (11b) und einer 5 bis 30 µm dicken Schicht (11a), an der die Kathodenreaktionen stattfinden können, wobei diese Schichten aus Gemischen von einem oder mehreren Metallen und keramischem Material - insbesondere Elektrolytmaterial - zusammengesetzt sind.

10. Hochtemperatur-Brennstoffzelle nach einem der Ansprüche 1 bis 9, dadurch gekennzeichnet, dass die Grundschicht (30) der Trägerstruktur auf der einen Oberfläche eines plattenförmigen Körpers (50) aufgelötet ist, wobei dieser Körper für die Einspeisung von Luft (45) in die Zelle vorgesehen ist.

11. Batterie von Hochtemperatur-Brennstoffzellen gemäss einem der Ansprüche 1 bis 10, dadurch gekennzeichnet, dass die Zellen im wesentlichen zentralsymmetrisch ausgebildet sind und dass die Zellen in Serie geschaltet einen zylindrischen Stapel bilden.

## Claims

1. High temperature fuel cell with a thin film electrolyte (10), the electrochemically active element of which - consisting of a cathode (11), an electrolyte and an anode (12) - is executed as a planar multi-layer structure (1), wherein at least the electrolyte layer and the cathode layer are provided on a porous, gas-permeable carrier structure (20, 30) by means of a thin film technique, characterised in that the carrier structure is a sintered body of metallic ceramic material (31) which comprises a highly porous base layer (30) as well as a fine pored cover layer (20) placed on the base layer and preferably consisting of anode material, wherein the pores (32) of the base layer are open with respect to one another and have an average diameter of at least 300 mm, while the pores (21) of the cover layer have diameters which are not substantially larger than 1 mm, and wherein the coefficient of thermal expansion of the carrier structure is substantially the same as that of the solid electrolyte.

2. High temperature fuel cell in accordance with claim 1 characterised in that the cover layer (20) is manufactured by means of a tape casting process and has a thickness of 80 to 300 mm, preferably of about 150 mm.

3. High temperature fuel cell in accordance with claim 1 or claim 2 characterised in that the base layer (30) has an open-pore foam structure.

4. High temperature fuel cell in accordance with one of the claims 1 to 3 characterised in that the metal ceramic material (31) of the carrier structure consists of nickel and stabilised zirconium oxide.

5. High temperature fuel cell in accordance with one of the claims 1 to 4 characterised in that the thickness of the electrolyte layer (10) amounts to between 5 and 20 mm.

6. High temperature fuel cell in accordance with one of the claims 1 to 5, characterised in that the electrolyte layer (10) is deposited directly onto the cover layer (20) of the carrier structure.

7. High temperature fuel cell in accordance with one of the claims 1 to 5 characterised in that at least one layer (12) acting as an anode is placed between the cover layer (20) of the carrier structure and the electrolyte layer (10).

8. High temperature fuel cell in accordance with claim 7, characterised in that the anode consists of two films (12a, 12b), of a 1 to 15 mm thick compensatingly acting transition layer (12b) and of a 5 to 30 mm thick layer (12a) at which the anode reactions can take place, with these layers being composed of mixtures of one or more metals and ceramic material - in particular electrolyte material.

9. High temperature fuel cell in accordance with one of the claims 1 to 8 characterised in that the cathode (11) consists of two layers (11a, 11b), of a 1 to 15 mm thick compensatingly acting transition layer (11b) and of a 5 to 30 mm thick layer (11a) at which the cathode reactions can take place, with these layers being composed of mixtures of one or more metals and ceramic material - in particular electrolyte material.

10. High temperature fuel cell in accordance with one of the claims 1 to 9 characterised in that the base layer (30) of the carrier structure is soldered onto the one surface of a plate-shaped body (50), with said body being provided for the infeed of air (45) into the cell.

11. Battery of high temperature fuel cells in accordance with one of the claims 1 to 10 characterised in that the cells are formed substantially centrally symmetrically; and in that the cells connected in series form a cylindrical stack.

## Revendications

1. Pile à combustible à haute température avec un électrolyte (10) en film mince dont l'élément électrochimiquement actif - se composant de la cathode (11) de l'électrolyte et de l'anode (12), est configuré comme une structure multicouche plane (1) où au moins la couche de cathode et la couche d'électrolyte sont formées par une technique de film mince sur une structure de support poreuse perméable au gaz (20, 30),
caractérisée en ce que la structure de support est un corps fritté en une matière métallocéramique (31) qui comporte une couche de base très poreuse (30) ainsi qu'une couche de recouvrement (20) placée sur la couche de base, à pores fins, avantageusement se composant d'un matériau d'anode, où les pores (32) de la couche de base ouvrent dans des directions opposées et présentent un diamètre moyen d'au moins 320 µm tandis que les pores (21) de la couche de recouvrement présentent des diamètres qui ne sont pas considérablement plus grands que 1 µm et où le coefficient de dilatation thermique de la structure de support est essentiellement identique à celui de l'électrolyte solide.

2. Pile à combustible à haute température selon la revendication 1, caractérisée en ce que la couche de recouvrement (20) est produite au moyen d'un procédé de coulage en bande et a une épaisseur de 80 à 300 µm, avantageusement de l'ordre de 150 µm.

3. Pile à combustible à haute température selon la revendication 1 ou 2, caractérisée en ce que la couche de base (30) présente une structure mousse à pores ouverts.

4. Pile à combustible à haute température selon l'une des revendications 1 à 3, caractérisée en ce que la matière métallocéramique (31) de la structure de support se compose de nickel et d'oxyde de zirconium stabilisé.

5. Pile à combustible à haute température selon l'une des revendications 1 à 4, caractérisée en ce que l'épaisseur de la couche d'électrolyte (10) est comprise entre 5 et 20 µm.

6. Pile à combustible à haute température selon l'une des revendications 1 à 5, caractérisée en ce que la couche d'électrolyte (10) est appliquée directement sur la couche de recouvrement (20) de la structure de support.

7. Pile à combustible à haute température selon l'une des revendications 1 à 5, caractérisée en ce qu'entre la couche de recouvrement (20) de la structure de support et la couche d'électrolyte (10) est agencée au moins une couche (12) servant d'anode.

8. Pile à combustible à haute température selon la revendication 7, caractérisée en ce que l'anode se compose de deux films (12a, 12b), une couche de transition (12b), ayant un effet de compensation, de 1 à 15 µm d'épaisseur et une couche de 5 à 30 µm d'épaisseur (12a) sur laquelle peuvent avoir lieu les réactions d'anode, ces couches se composant de mélanges d'un ou plusieurs métaux et d'une matière céramique, en particulier une matière d'électrolyte.

9. Pile à combustible à haute température selon l'une des revendications 1 à 8, caractérisée en ce que la cathode (11) se compose de deux couches (11a, 11b), une couche de transition (11b) de 1 à 15 µm d'épaisseur ayant un effet de compensation et une couche (11a) de 5 à 30 µm d'épaisseur sur laquelle peuvent avoir lieu les réactions de cathode, ces couches se composant de mélanges d'un ou plusieurs métaux et d'une matière céramique, en particulier une matière d'électrolyte.

10. Pile à combustible à haute température selon l'une des revendications 1 à 9, caractérisée en ce que la couche de base (30) de la structure de support est soudée sur une surface d'un corps en forme de plaque (50), ce corps étant prévu pour l'alimentation en air (45) dans la pile.

11. Batterie de piles à combustible à haute température selon l'une des revendications 1 à 10, caractérisée en ce que les piles sont configurées essentiellement de façon centralosymétrique et en ce que les piles en circuit en série forment un empilement cylindrique.
